# EUROPEAN PATENT APPLICATION

(11) **EP 0 550 368 A2**
(43) Date of publication of application: **07.07.1993**
(21) Application number: 92480164.0
(22) Date of filing: 05.11.1992
(51) Int. Cl.: G06F 15/403

(54) **A method and system for a device interface to a database manager**

(30) Priority: 31.12.1991 US 815667
(71) Applicant: International Business Machines Corporation, Armonk, N.Y. 10504 (US)
(72) Inventor: Cavendish, Cathy J., Dallas, TX 75248 (US); Otto, Sam E., Grapevine, TX 76051 (US)
(74) Representative: de Pena, Alain

(57) **Abstract**

A system includes a database system, a user application, an operating system, and a database device driver attached to the operating system, the database system, and the user application, the system comprising. The system transmits a dynamic access request from the user application to the database device driver. The database device driver produces a dynamic access command for transmission to the database system in response the transmission of the dynamic access request to the database device driver. The database device driver receives a response from the database system in response to the dynamic access command transmitted to the database system. The response received from the database system is reformatted into a response for transmission to the user application and transmitted from the database device driver to the user application.

## Description

The present invention relates generally to an improved method and system for accessing a database and in particular, to an improved method and system for accessing a database system having a database manager and a database, utilizing a simplified interface format. Still more particularly, the present invention provides an improved method and system for accessing a database manager by providing a database device driver interface.

Many user applications make use of the services of the database manager in OS/2, a product of International Business Machines, Incorporated or database managers in other database systems. It is currently difficult to write user applications that make use of static or dynamic abilities of a database. Presently, many user applications incorporate low level database API calls (application program interface calls) that are written in the code that the user application is written in. For each language that a program is written in, for example Pascal or C, a different set of user application calls must be written for the particular programming language. Thus, for each language that user applications are written in a new set of API calls must be developed if the writers of the user applications wish to access a database manager to use a database, or an unfamiliar language must be incorporated into the the user's program in a separate module. Moreover, if access to a different type of database system is desired the user application must have code written to access the particular data base system. For example, if a user application is written to utilize the database manager in OS/2, the user application would not be able to access a remote database system that utilizes a different database manager unless a set of API calls are developed to access that particular database system.

In addition, the API calls utilized by a user application to access a database system are not simple commands. Instead, each particular command or request requires three or more API calls embedded into a database calling procedure, which are complex. For example, an entire program or module within a program must be written to create the appropriate database access data structures, host variables (the term used in programming to the OS/2 database manager), make calls to open the database, start using the database, open a cursor, execute a cursor, loop on a fetch, check for errors and when successful completion occurs, send a stop call to the database. This cannot be done with simply a few lines of code.

A pseudocode example for a trivial case involving updating all rows in the "People" table of the "Employee" data base to a given date "12-25-91" would be as follows:
//Include necessary libraries and date structures from header files
//declare global host variables for database access date newDate; main program
issue start command to database "Employee"
declare statement "Update all rows in People table with new date"
string copy new date into host variable newDate
execute the update statement
check for errors
if errors
return error number and description of error
in appropriate data structure
issue commit
issue stop database command
end program

Consequently, developing a user application with access to various database systems requires a large amount of time, effort, and detailed knowledge, about how the database manager works on the part of the programmer.

It should therefore be apparent that a method and system for simplifying the procedure utilized in accessing a database system would be desirable.

One object of the present invention is to provide an improved method and system for accessing a database system.

It is another object of the present invention to provide an improved method and system for accessing a database system, having a database manager and a database, utilizing a simplified interface format.

It is yet another object of the present invention to provide an improved method and system for accessing a database manager by providing a database device driver interface.

A system includes a database system, a user application, an operating system, and a database device driver attached to the operating system, the database system, and the user application. The system transmits dynamic access request from the user application to the database device driver. The database device driver produces a dynamic access command for transmission to the database system in response to the transmission of the dynamic access request to the database device driver. The database device driver receives a response from the database system in response to the dynamic access command transmitted to the database system. The response received from the database system is reformatted into a response for transmission to the user application and transmitted from the database device driver to the user application.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 depicts a pictorial representation of a data processing system which may be utilized to implement the method of the present invention;
Figure 2 is a block diagram of a system utilizing a device driver in accordance with a preferred embodiment of the present invention;
Figure 3 depicts a flowchart of a method for opening a database with a database driver in accordance with a preferred embodiment of the present invention;
Figure 4 is a flowchart of a method for closing a database with a database driver in accordance with a preferred embodiment of the present invention;
Figure 5 depicts a flowchart of a method for the read portion of the database device driver in accordance with a preferred embodiment of the invention;
Figure 6 is a flowchart of a method for a read potion of the database driver in accordance with a preferred embodiment of the present invention; and
Figure 7 depicts a flowchart for a method in a database device driver for responding to a write call from a user application program in accordance with a preferred embodiment of the present invention.

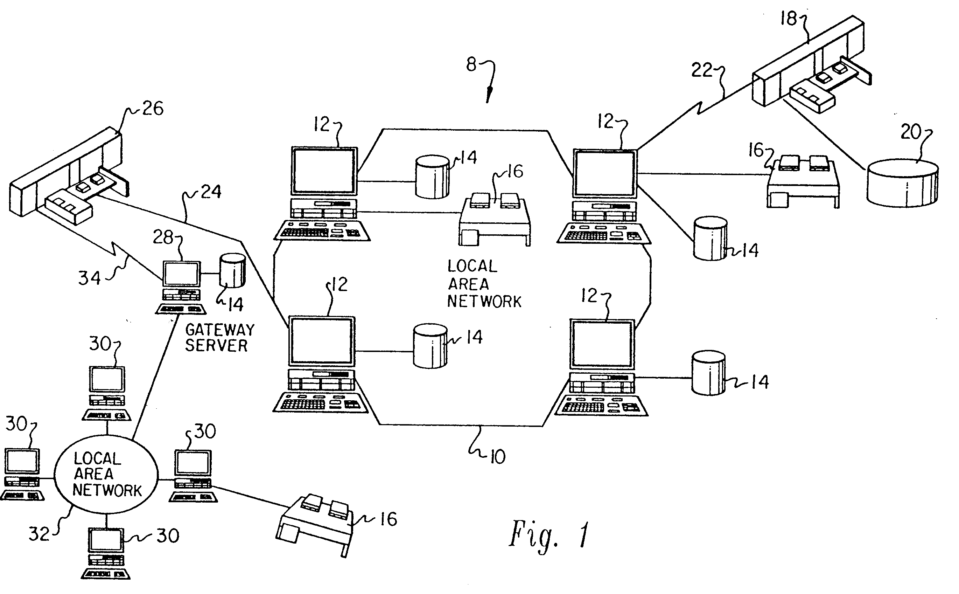

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area Networks ("LAN") 10 and 32, each of which preferably includes a plurality of individual computers 12 and 30, respectively. Of course, those skilled in the art will appreciate that a plurality of Intelligent Work Stations ("IWS") coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store documents or resource objects which may be periodically accessed by any user within data processing system 8. In a manner well known in the prior art, each such document or resource object stored within a storage device 14 may be freely interchanged throughout data processing system 8 by transferring a document to a user at an individual computer 12 or 32, for example.

Still referring to Figure 1, it may be seen that data processing network 8 may also include multiple mainframe computers, such as mainframe computer 18, which may be preferably coupled to Local Area Network ("LAN") 10 by means of communications link 22. Main frame computer 18 may also be coupled to a storage device 20 which may serve as remote storage for Local Area Network ("LAN") 10. Similarly, Local Area Network ("LAN") 10 may be coupled via communications link 24 through a subsystem control unit/communications controller 26 and communications link 34 to a gateway server 28. Gateway server 28 is preferably an individual computer or Interactive Work Station ("IWS") which serves to link Local Area Network ("LAN") 32 to Local Area Network ("LAN") 10.

As discussed above with respect to Local Area Network ("LAN") 32 and Local Area Network ("LAN") 10, a plurality of documents or resource objects may be stored within storage device 20 and controlled by main frame computer 18, as Resource Manager or Library Service for the resource objects thus stored. Of course, those skilled in the art will appreciate that main frame computer 18 may be located a great geographic distance from Local Area Network ("LAN") 10 and similarly Local Area Network ("LAN") 10 may be located a substantial distance from Local Area Network ("LAN") 32. For example, Local Area Network ("LAN") 32 may be located in California while Local Area Network ( "LAN" ) 10 may be located within Texas and main frame computer 18 may be located in New York.

A user application may be found on individual computers 12 and 30, on gateway server 28, or on some computer in LAN 10 or 32, or on mainframe computer 18. The user application may access one or more database systems located on the same computer as the user application. In other cases, the user application may access different database systems that may be located on remote storage 20.

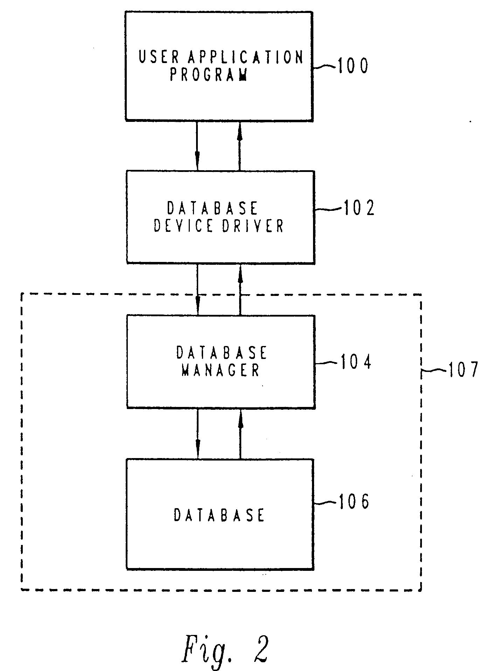

Referring now to Figure 2, there is depicted a block diagram of a system utilizing a device driver in accordance with a preferred embodiment of the present invention. User application program 100 sends a single read, write, open, or close request to database device driver 102. Database device driver 102 receives the read, write, open and close API calls in the form of strings in a preferred embodiment of the present invention. These calls present a common, consistent interface to user applications. Database device driver 102 in accordance with a preferred embodiment of the present invention may be implemented as a device driver connected to the operating system or as a set of Dynamic Link Library ("DLL") calls. More information on DLL and API calls may be found in La-Garde et al., IBM Operating System/2 Version 1.2 Programming Guide, International Business Machines Corporation, Document No. 00F8833, 1989.

In response to a call from user application program 100, database device driver 102 sends an appropriate command to the database manager to insert, update, select, read, or make some other manipulation with respect to the data in the database. Database manager 104 retrieves or stores data in database 106 in response to the appropriate commands from database device driver 102.

Database device driver 102 is a language independent driver that adds a layer between user application program 100 and database manager 104. In other words, the database driveris not compiled as a part of a user application program. Instead, the database device driver is a separate set of code that is capable of receiving access requests from many different user applications. The database device driver could be incorporated into the operating system or written as a dynamic link library.

Database device driver 102 in accordance with the present invention provides a standard device interface to a user application that is similar to a device driver for reading a keyboard or a device driver for a printer. Moreover, in accordance with the present invention, database device driver 102 is utilized only in dynamic queries. Database device driver 102 may be utilized to access remote databases without having to change user application program 100. The following figures describe the process involved in the calls made to the database device driver in accordance with a preferred embodiment of the present invention. More detailed descriptions of each particular call to the database device driver will follow the descriptions of the processes.

Referring again to Figure 2, user application program 100 issues an "open" API call to open a database named "People" having a table named "Employees" to database device driver 102. In response, database device driver 102 sends a start database "People" command to database manager 104. Database manager 104 starts using database "People" 106 and receives a return result from database "People" 106. Upon receiving a result from database "People" 106, database manager 104 returns a success message to database device driver 102. Subsequently, database device driver 102 returns a predetermined value to user application program 100 indicating that database named "people" has been opened. Closing a database would involve the same type of flow and utilizing a "close" API call sent to database device driver 102 to close the database. Moreover, database manager 104 and database "People" 106 may be located on a system 107 in a different location from user application 100.

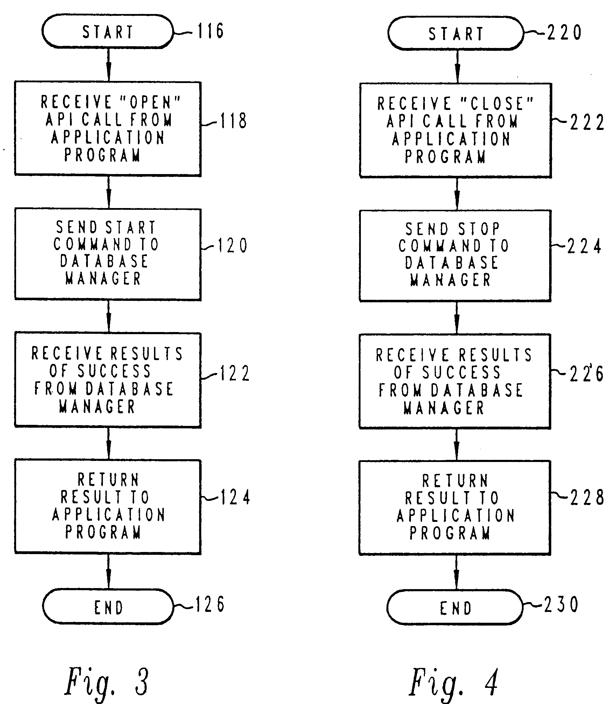

With reference to Figure 3, there is depicted a flowchart of a method for opening a database with a database driver in accordance with a preferred embodiment of the present invention. The process begins as illustrated in block 116, and thereafter proceeds to block 118, which shows the reception of an "open" API call from the user application program by the database device driver. The process then proceeds to block 120, which illustrates the sending of a start command to the database manager by the database device driver. Thereafter, the process proceeds to block 122, which shows the reception of results of success or the opening of the database from the database manager. Block 124 illustrates the return of the result to the user application program. Subsequently, the process terminates in block 126.

Referring to Figure 4, there is depicted a flowchart of a method for closing a database with a database driver in accordance with a preferred embodiment of the present invention. The process begins as illustrated in block 220, and thereafter proceeds to block 224, which shows the reception of an "close" API call from the user application program by the database device driver. The process then proceeds to block 224, which illustrates the sending of a stop command to the database manager by the database device driver. Thereafter, the process proceeds to block 226, which shows the reception of results of success or the closing of the database from the database manager. Block 228 illustrates the return of the result to the user application program. Subsequently, the process terminates in block 230.

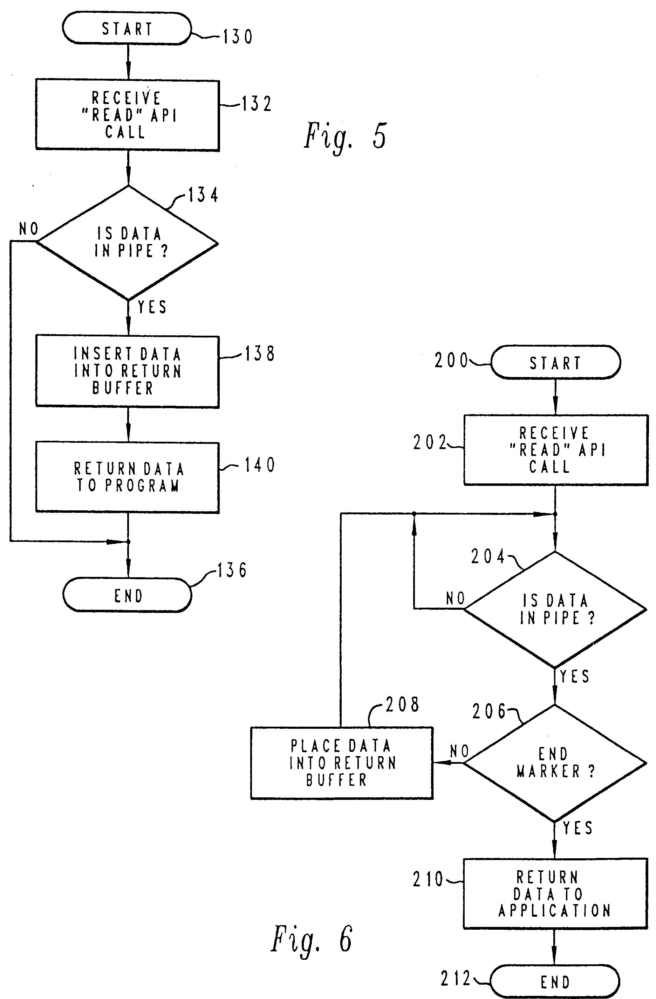

With reference to Figure 5, there depicted is a flowchart of a method for the read API portion of the database device driver in accordance with a preferred embodiment of the invention. As illustrated, the process begins at block 130 and thereafter proceeds to block 132, which illustrates the database device driver receiving a "read" API call from a user application program. The process then proceeds to block 134, which illustrates a determination by the database device driver of whether data is in the pipe. A pipe is a type of connection between the database manager and the database device driver that allows for the transfer of data. Those skilled in the art will realize other types of connections may be utilized. If data is not in the pipe, the process then terminates in block 136. Referring again to block 134, if data is present in the pipe, the process then continues to block 138, which illustrates the insertion of data into a return buffer.

Thereafter, the process proceeds to block 140, which shows the return of data to the user application program. Afterwards, the process terminates in block 136. This process of receiving a "read" API call from the application program would continue until the user application program received an end marker signaling that all the data had been retrieved from the database.

It is also contemplated that under a method for a database device driver in accordance with a preferred embodiment of the present invention, the database device driver may wait for all the data to be retrieved from the database manager before returning data to the user application program. Referring to Figure 6, there is depicted a flowchart of a method for a read portion of the database driver in accordance with a preferred embodiment of the present invention. The process begins as illustrated in block 200 and thereafter proceeds to block 202, which shows the database device driver receiving a "read" API call from an application program. The process then proceeds to block 204 which shows a determination of whether data is present in the pipe. If data is not in the pipe, the process waits at block 204. If data is present in the pipe the process, the process proceeds to block 206, which illustrates a determination of whether an end marker has been return from the database manager. If an end marker has not been returned from the database manager, the process then proceeds to block 208, which shows the insertion of the data into a return buffer. The process then proceeds to block 204 to determine whether more data is present for placement into the return buffer.

Referring back to block 206, if an end marker has been returned from the database manager, the process then proceeds to block 210, which illustrates sending the data stored in the return buffer to the application program. Thereafter, the process terminates in block 212.

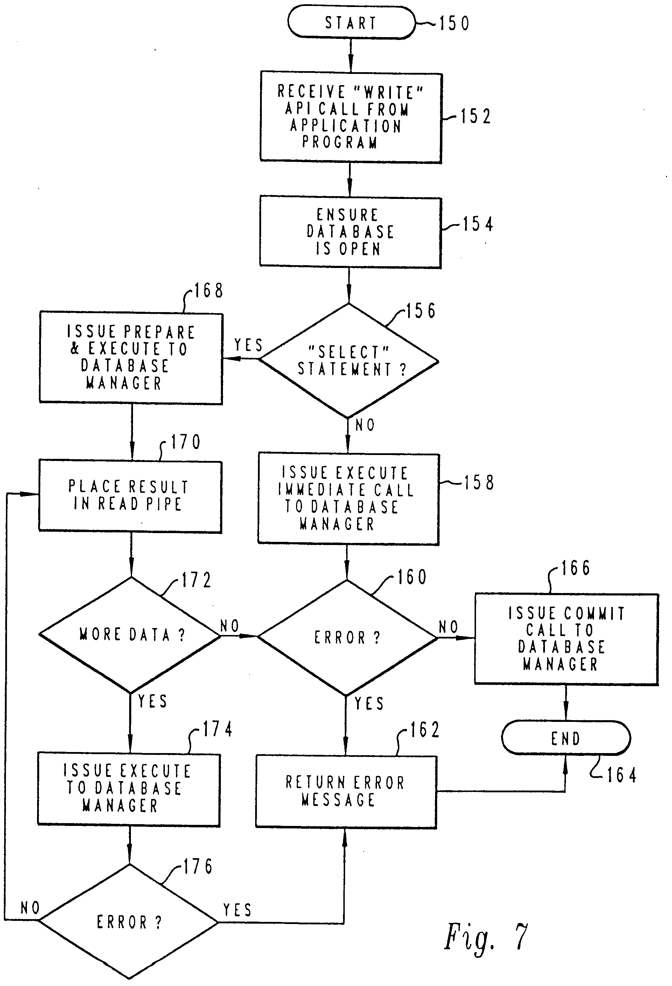

With reference to Figure 7, there is depicted a flowchart for a method in a database device driver responding to a "write" API call from a user application program in accordance with a preferred embodiment of the present invention. Basically, the database device driver obtains all the data needed to handle the transaction of writing to the database and making the proper calls to the database manager in order to write to the database; the database device driver handles the entire transaction for the user application. As illustrated, the process begins in block 150 and thereafter proceeds to block 152, which shows the reception of a "write" API call by the database device driver from the user application program.

Next, block 154 illustrates ensuring that the database is open. In ensuring that the database is open, the database device driver will return an error to the user application if the database has not already been opened. Next, the process proceeds to block 156, which shows a determination by the device interface of whether a "SELECT" statement was made. If the API call does not contain a "SELECT" statement, the process then proceeds to block 158, which illustrates the issuance of an EXECUTE IMMEDIATE call to the database manager. "SELECT" and "EXECUTE IMMEDIATE" are calls or commands utilized in accessing the database manager. Thereafter, the process continues to block 160, which shows a determination of whether an error is present. If the determination results in an error being present, the process then proceeds to block 162, which illustrates the return of an error message to the user application program from the database device driver. The illustrative process then terminates as shown in block 164.

Referring back to block 160, if an error is not present, then the process proceeds to block 166 which shows the issuance of a COMMIT call to the database manager by the database device driver. The process thereafter terminates in block 164.

Referring back to block 156, if the API call is a "SELECT" statement, the process then proceeds to block 168, which illustrates the issuance of a PREPARE and EXECUTE command to the database manager. Next, block 170 shows the placement of the result in a read "pipe." Afterwards, the process proceeds to block 172, which illustrates a determination of whether more data is present. If more data is present, the process then proceeds to block 174, which shows the issuance of an EXECUTE command to the database manager by the database device driver.

Thereafter, the process proceeds to block 176, which illustrates a determination of whether an error has occurred. If an error has occurred, the process then proceeds to block 162, which illustrates the return of an error message to the user application program with the process terminating in block 164. Referring back to block 164, if no error has occurred, the process then returns to block 170, which shows the placement of the result in a read "pipe".

Again referring to block 172, if no more data is present, the process then continues to block 160, which shows a determination of whether an error has occurred. If no error has occurred, the process then continues to block 166, which illustrates the issuance of a COMMIT call to the database manager and the process thereafter terminates in block 164.

Referring back to block 160, if an error has occurred, the process then proceeds to block 162, which illustrates the return of an error message to the user application program by the database device driver. The illustrated process then terminates in block 164. The statements and commands utilized by the database device driver in the above described process are standard to the database manager in OS/2 and are well known by those skilled in the art.

One advantage of the present invention is that it provides a "database device driver" for accessing a database system through a database manager. In essence, the present invention provides a generic device type interface much like a device driver utilized to run a keyboard or a printer. Under the present invention, the database device driver is independent of the language in which the user application is written in. Much like the case with a printer device driver, or a keyboard device driver, a user application need only utilize a read, write, open, or close API call to the database device driver. A device driver is a procedure that contains allthe underlying low level code needed to attach and use a device. Consequently, under the present invention, the database manager and its database are treated and utilized in a manner similar to a video display screen, keyboard, a hard drive, a disk drive, or other auxiliary device. Again, the database device driver of the present invention may be connected to the operating system as a device driver or the database device driver may contain a set of DLL calls.

Therefore, under the present invention, programmers writing user applications that utilize various database facilities may develop their user applications without unnecessary complexity in writing specialized calls or queries for a particular database system. In addition, the database device driver of the present invention allows for a user application program to access databases from a remote site in a distributed environment interface without alterations or modifications to the user application program. The database device driver would contain the necessary DLL commands and the necessary protocols for accessing a database system in a distributed environment in a preferred embodiment of the present invention.

In accordance with a preferred embodiment of the present invention, the format of the calls to the database device driver and the purpose of the calls is described as follows:
DBOPEN (HANDLE, DBName, NameLength, Options, ReturnCode). The purpose of the open call is to start the Query Manager and open the specified database to be accessed. It will verify that the specified database exists and that the user is authorized to use it. An error code will be returned if any error conditions are encountered.
DBREAD (Handle, Buffer, BufferSize, BytesRead, ReturnCode). The purpose of this call is to read the results of a dynamic query (or other action) against the database. The BufferSize should be sufficiently large to accommodate the query results and this should be checked against the number of BytesRead. The result returned will be one row regardless of the query. Additional reads should be done until the returned buffer is NULL or an error is encountered.
DBWRITE (Handle, Buffer, BufferSize, BytesWritten, ReturnCode). The purpose is to query the database with a dynamic query contained as a string in the buffer. the buffer will contain a string with a SELECT (or other) statement such as SELECT name FROM PEOPLE where LastName = "SMITH". The procedure sets up the FETCH routine and executes against the database. The result will be made available in the Buffer on the DBREAD call.
DBCLOSE (Handle, ReturnCode). The purpose of the close call is to shut down the communications with the Database Manager and the current database. If another database is to be accessed, a DBCLOSE and a different DBOPEN with the new database name must be issued. The database manager is left running since there is no overhead associated with it, only with starting it.

The following is an example of pseudo code involving open, close, read, and write methods in the database device driver.
OPEN (DBNAME)
start Database Manager
start Database DBNAME
check for errors
if any return database error, message
else return 0 indicating success
end
CLOSE (DBNAME)
issue COMMIT to DBNAME
stop Database DBNAME
stop Database Manager
check for errors
if any return database errors, message
else return 0
end
READ (DBNAME, TABLENAME)
reissue last FETCH command on Tablename
if none return error ("issue command on write first")
else execute last FETCH
return result data COLNAME//data//COL2//data... //in buffer
end
WRITE (DBNAME, STATEMENT)
ensure DBNAME is open and started
is command in statement a SELECT Statement?
if not EXECUTE IMMEDIATE Statement
check for errors
if any, return error #, message
else return 0
else create a cursor for statement
open cursor
(1) prepare statement
   execute FETCH
   check for errors
   if any return error #, message
   else put result in read buffer
(2) if no data found
   return ("no data found") message, 0
   else repeat from (1)-(2) until no data left
   if errors
   return error message
   else return 0
   close cursor
   issue COMMIT
   end

## Claims

1. A method in a system including a user application, a database manager, a database, and a operating system for processing a database access request comprising:
transmitting the database access request to a database device driver contained with in said operating system;
transmitting a command corresponding to the database access request from the database device driver to the database manager;
returning a result from the database manager to the database device driver;
reformatting the result returned to the database device driver; and
returning the reformatted result to the user application from the database device driver.

2. The method of Claim 1, wherein the database access request is for opening the database.

3. The method of Claim 1, wherein the database access request is for reading the database.

4. The method of Claim 1, wherein the database access request is for writing the database.

5. The method of Claim 1, wherein the dynamic access request is for closing the database.

6. The method of Claim 1, wherein the database access request is in a simplified format.

7. A system including a database system, a user application, and an operating system, the database system, and the user application, the system comprising:
means for transmitting a dynamic access request from the user application to a database device driver in the operating system;
means within the database device driver for producing a dynamic access command for transmission to the database system in response the transmission of the dynamic access request to the database device driver;
means for transmitting the dynamic access command from the database device driver to the database system;
means for the database device driver to receive a response from the database system in response to the dynamic access command transmitted to the database system;
means for reformatting the response received from the database system into a reformatted response for transmission to the user application; and
means for transmitting the reformatted response from the database device driver to the user application.

8. The system of Claim 7 wherein the database device driver is connected to the operating system.

9. The system of Claim 7 wherein the database device driver includes a dynamic link library.

10. The system of Claim 7 wherein the database system includes a database manager and a database.

11. The system of Claim 10, wherein the dynamic access request is to open the database and the dynamic access command produced causes the database to be opened.

12. The system of Claim 10, wherein the dynamic access request is to read the database and the dynamic access command produced causes the database to be read.

13. The system of Claim 10, wherein the dynamic access request is to write to the database and the dynamic access command causes a write to the database.

14. The system of Claim 10, wherein in the dynamic access command is to close the database and the dynamic access command produced causes the database to be closed.

15. The system of Claim 10, wherein a DBREAD data access request causes data to be returned to the user application from a buffer.
